# EUROPEAN PATENT APPLICATION

(11) **EP 4 589 560 A1**
(43) Date of publication of application: **23.07.2025**
(21) Application number: 23864979.2
(22) Date of filing: 15.05.2023
(51) Int. Cl.: G07G 1/12

(54) **DATA PROCESSING SYSTEM**

(30) Priority: 16.09.2022 JP 2022148106
(71) Applicant: Toshiba TEC Kabushiki Kaisha, Tokyo 141-8562 (JP)
(72) Inventor: HIRAMATSU, Naotake, Tokyo 141-8562 (JP); GOTANDA, Tsuyoshi, Tokyo 141-8562 (JP)
(74) Representative: Bandpay & Greuter
(86) International application number: PCT/JP2023/018070
(87) International publication number: WO 2024/057614

(57) **Abstract**

A data processing system includes a storage processing unit and a determination unit. The storage processing unit stores data related to a transaction based on product registration in a registration apparatus in a storage unit of the registration apparatus or an electronic device different from the registration apparatus. The determination unit determines a checkout apparatus as an output destination for outputting the data related to the transaction according to a movement of a user of the registration apparatus based on sensing data. In a case where the checkout apparatus as the output destination is determined by the determination unit, the storage processing unit stores information indicating the checkout apparatus as the output destination in the storage unit.

## Description

### FIELD

Embodiments of the present invention relate to a data processing system.

### BACKGROUND

In the retail industry, a checkout method in which a product registration operation and a checkout operation are performed in different apparatuses has been widely used. A semi-self method, a method of using a mobile registration terminal in which a terminal having a product registration function is provided in a shopping cart, a method of performing product registration using a mobile terminal or the like owned by a consumer or a mobile terminal prepared by a store, and the like are known as such a checkout method. In such a checkout method, the product registration operation is performed by a store clerk or a customer, and the checkout operation is performed by the customer.

In the semi-self method, the product registration operation is performed by the store clerk, and the store clerk performs an operation for designating a checkout apparatus with which the customer performs checkout after finishing the product registration operation in a registration apparatus.

### CITATION LIST

### PATENT LITERATURE

Patent Literature 1: Jpn. Pat. Appln. KOKAI Publication No. 2019-096074

### SUMMARY

However, the store clerk needs to perform the operation for designating the checkout apparatus with which the customer performs checkout after visually confirming the states of the plurality of checkout apparatuses. Such a series of operations is a heavy load for the store clerk.

To solve the problem, an object of the embodiments of the present invention is to provide a technology that enables a load of a user operating a registration apparatus to be reduced.

### BRIEF DESCRIPTION OF THE DRAWINGS

FIG. 1 is a block diagram illustrating a data processing system according to an embodiment.
FIG. 2 is a diagram illustrating a layout in a store to which the data processing system according to the embodiment is applied.
FIG. 3 is a block diagram illustrating a server according to the embodiment.
FIG. 4 is a block diagram illustrating a registration apparatus according to the embodiment.
FIG. 5 is a block diagram illustrating a checkout apparatus according to the embodiment.
FIG. 6 is a block diagram illustrating an image capturing apparatus according to the embodiment.
FIG. 7 is a diagram illustrating a data structure of apparatus relationship data stored in the image capturing apparatus according to the embodiment.
FIG. 8 is a diagram illustrating a first operation example of the data processing system according to the embodiment.
FIG. 9 is a flowchart illustrating a procedure of processing by a processor of the registration apparatus in the first operation example according to the embodiment.
FIG. 10 is a flowchart illustrating a procedure of processing by a processor of the image capturing apparatus in the first operation example according to the embodiment.
FIG. 11 is a flowchart illustrating a procedure of processing by a processor of the server in the first operation example according to the embodiment.
FIG. 12 is a flowchart illustrating a procedure of processing by a processor of the checkout apparatus in the first operation example according to the embodiment.
FIG. 13 is a diagram illustrating a second operation example of the data processing system according to the embodiment.
FIG. 14 is a flowchart illustrating a procedure of processing by the processor of the registration apparatus in the second operation example according to the embodiment.
FIG. 15 is a diagram illustrating a third operation example of the data processing system according to the embodiment.
FIG. 16 is a flowchart illustrating a procedure of processing by the processor of the image capturing apparatus in the third operation example according to the embodiment.

### DETAILED DESCRIPTION

In an embodiment, a data processing system includes a storage processing unit and a determination unit. The storage processing unit stores data related to a transaction based on product registration in a registration apparatus in a storage unit of the registration apparatus or an electronic device different from the registration apparatus. The determination unit determines a checkout apparatus as an output destination for outputting the data related to the transaction according to a movement of a user of the registration apparatus based on sensing data. In a case where the checkout apparatus as the output destination is determined by the determination unit, the storage processing unit stores information indicating the checkout apparatus as the output destination in the storage unit.

### (Embodiment)

Hereinafter, an embodiment will be described with reference to the drawings. In the drawings, the same components are denoted by the same reference signs as much as possible, and redundant description is omitted.

### (Configuration example)

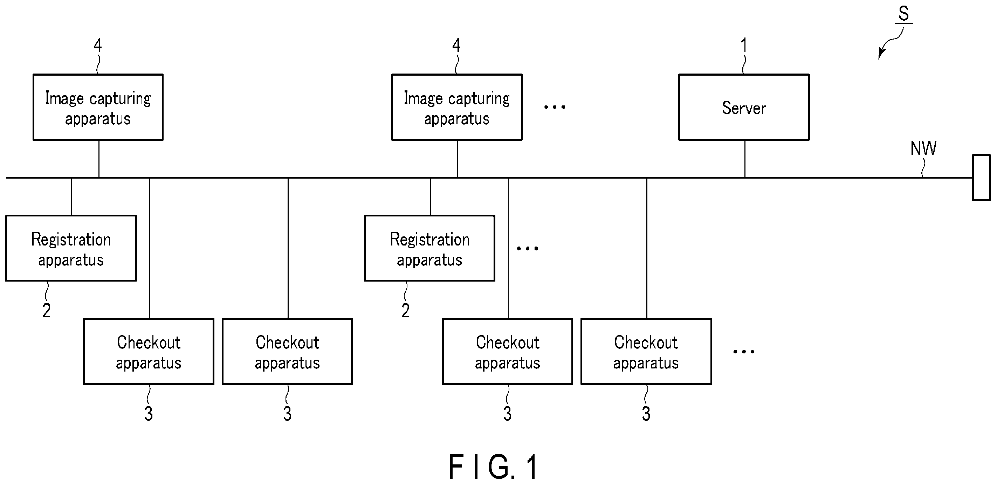

FIG. 1 is a block diagram illustrating a data processing system S according to an embodiment.

The data processing system S is a system that processes data in a store. The data processing system S realizes a semi-self checkout method in which a product registration operation and a checkout operation are performed in different apparatuses.

The data processing system S includes a server 1, a plurality of registration apparatuses 2, a plurality of checkout apparatuses 3, and a plurality of image capturing apparatuses 4. The server 1, the plurality of registration apparatuses 2, the plurality of checkout apparatuses 3, and the plurality of image capturing apparatuses 4 are connected via a network NW so as to be able to communicate with each other. For example, the network NW is a local area network (LAN) or the like. The network NW may include a wireless network or a wired network.

Although the server 1 is provided in FIG. 1, the data processing system S may include no server 1. Although the plurality of registration apparatuses 2 are provided in FIG. 1, the data processing system S may include one registration apparatus 2. Although the plurality of image capturing apparatuses 4 are provided in FIG. 1, the data processing system S may include one image capturing apparatus 4. The data processing system S is not limited to one that includes all of the electronic devices described above. The data processing system S may refer to a system that includes at least one electronic device.

The server 1 is an electronic device capable of processing data. The server 1 is an example of an electronic device that differs from the registration apparatus 2. The server 1 is an example of an information processing apparatus. A configuration example of the server 1 will be described below.

The registration apparatus 2 is an electronic device capable of registering a product for each transaction. The transaction is a commercial transaction set for establishing giving and receiving of a product between a customer and a store. Processing of registering a product by the registration apparatus 2 is referred to as product registration. A product registered by the registration apparatus 2 is referred to as a registered product. A product that is not registered by the registration apparatus 2 is referred to as an unregistered product. The registration apparatus 2 generates first checkout data based on product registration for the transaction. The first checkout data is an example of checkout data for checkout for the transaction. The first checkout data is only required to be data that enables checkout for the transaction to be processed in the checkout apparatus 3, and the content of the first checkout data is not limited to any particular content. The first checkout data is transaction data including product data for each registered product in the transaction, data of a charged amount of the transaction, and the like. The product data may include various types of data related to a product, such as a product name and a price. The first checkout data may include a transaction number that identifies the transaction. The first checkout data is an example of data related to the transaction. A configuration example of the registration apparatus 2 will be described below.

The checkout apparatus 3 is an electronic device capable of processing a checkout for the transaction based on product registration in the registration apparatus 2. The transaction based on the product registration in the registration apparatus 2 is the transaction in which a product is registered in the registration apparatus 2. The checkout includes payment of a charge for the transaction. The checkout includes settlement. A configuration example of the checkout apparatus 3 will be described below.

The image capturing apparatus 4 is an electronic device capable of acquiring image capturing data based on image capturing. For example, the image capturing data is moving image data. The image capturing apparatus 4 is an example of a sensing apparatus. The image capturing data is an example of sensing data. The image capturing apparatus 4 is an example of an electronic device that differs from the registration apparatus 2. A configuration example of the image capturing apparatus 4 will be described below.

A layout in a store to which the data processing system S is applied will be described.

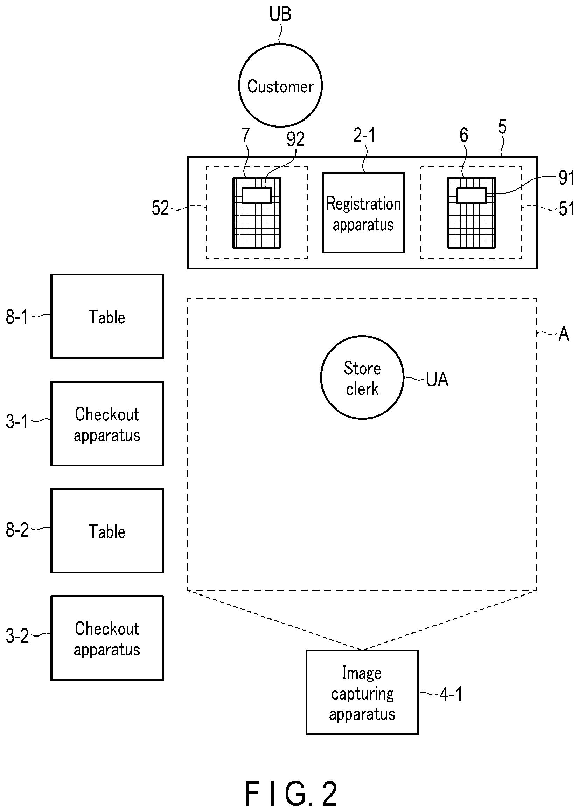

FIG. 2 is a diagram illustrating a layout in a store to which the data processing system S is applied.

A registration apparatus 2-1 is installed on a table 5. The registration apparatus 2-1 is one registration apparatus 2 out of the plurality of registration apparatuses 2. The registration apparatus 2-1 is an apparatus operated by a store clerk UA. The store clerk UA performs product registration for the transaction of a customer UB in the registration apparatus 2-1. The store clerk UA is an example of a user of the registration apparatus 2-1.

The table 5 includes a region 51 in which an unregistered product 91 in the transaction is placed. Although one unregistered product 91 is illustrated in FIG. 2, a plurality of unregistered products 91 may be placed in the region 51. The region 51 is a region in which a basket 6 is also placed. The basket 6 is a basket for putting the unregistered product 91 in the transaction. Although one basket 6 is illustrated in FIG. 2, a plurality of baskets 6 may be placed in the region 51. The table 5 includes a region 52 in which a registered product 92 in the transaction is placed. Although one registered product 92 is illustrated in FIG. 2, a plurality of registered products 92 may be placed in the region 52. The region 52 is a region in which a basket 7 is also placed. The basket 7 is a basket for putting the registered product 92 in the transaction. Note that, as the region 52, a region of the table 5 at a side of the registration apparatus 2-1 closer to the store clerk UA (in front of the store clerk UA) may be used. Although one basket 7 is illustrated in FIG. 2, a plurality of baskets 7 may be used in checkout for the transaction.

A checkout apparatus 3-1 and a checkout apparatus 3-2 are two checkout apparatuses 3, out of the plurality of checkout apparatuses 3, capable of processing checkout for the transaction based on product registration in the registration apparatus 2-1. The checkout apparatus 3-1 and the checkout apparatus 3-2 are an example of the plurality of checkout apparatuses 3 capable of processing checkout for the transaction based on the product registration in the registration apparatus 2-1. The plurality of checkout apparatuses 3 capable of processing checkout for the transaction based on the product registration in the registration apparatus 2-1 may be three or more checkout apparatuses 3. Note that the number of checkout apparatuses 3 capable of processing checkout for the transaction based on the product registration in the registration apparatus 2-1 is not necessarily plural, and may be one.

A table 8-1 is a table on which the customer UB places some or all of the registered products 92 in the transaction of the customer UB to perform checkout for the transaction with the checkout apparatus 3-1. The table 8-1 is a table on which the basket 7 in which some or all of the registered products 92 in the transaction of the customer UB are put is also placed. A table 8-2 is a table on which the customer UB places some or all of the registered products 92 in the transaction of the customer UB to perform checkout for the transaction with the checkout apparatus 3-2. The table 8-2 is a table on which the basket 7 in which some or all of the registered products 92 in the transaction of the customer UB are put is also placed.

An image capturing apparatus 4-1 captures an image of the store clerk UA. The image capturing apparatus 4-1 is an image capturing apparatus 4 associated with the registration apparatus 2-1 out of the plurality of registration apparatuses 2. An image capturing range A of the image capturing apparatus 4-1 is only required to be a range in which the store clerk UA can be captured.

As described with reference to FIG. 2, in the data processing system S, the registration apparatus 2, the plurality of checkout apparatuses 3, and the image capturing apparatus 4 associated with each other constitute a group. The data processing system S includes as many groups as the number of registration apparatuses 2.

A configuration example of the server 1 will be described.

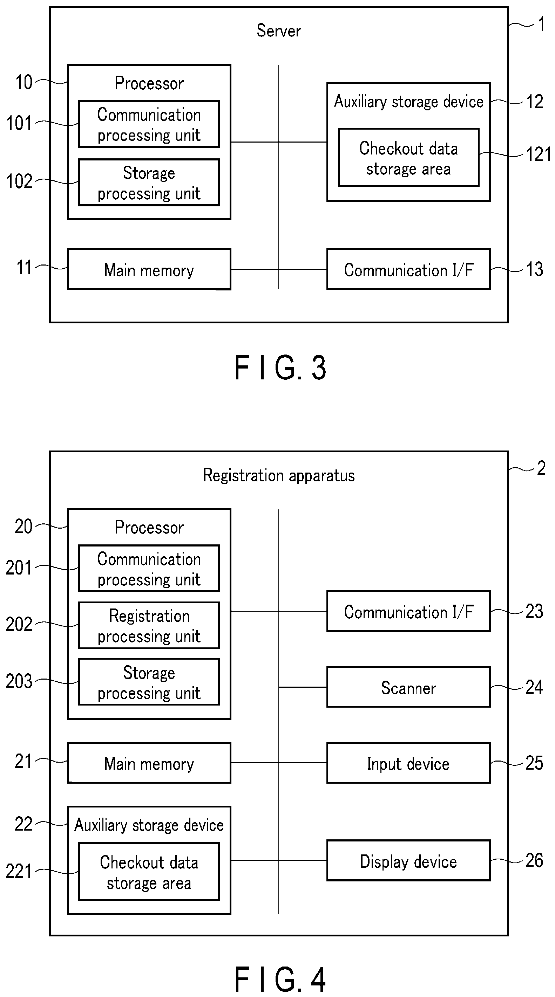

FIG. 3 is a block diagram illustrating the server 1.

The server 1 is an electronic device including a processor 10, a main memory 11, an auxiliary storage device 12, and a communication interface 13. The units constituting the server 1 are connected so as to be able to input and output signals to and from each other. In FIG. 3, the interface is described as an "I/F".

The processor 10 corresponds to a central part of the server 1. The processor 10 is an element constituting a computer of the server 1. For example, the processor 10 is a central processing unit (CPU), but is not limited thereto. The processor 10 may include various circuits. The processor 10 is an example of a processing circuit of the server 1. The processor 10 loads a program stored in advance in the main memory 11 or the auxiliary storage device 12 into the main memory 11. The program is a program capable of causing the processor 10 to execute processing of each unit to be described below realized by the processor 10. The processor 10 executes various types of processing by executing the program loaded into the main memory 11.

The main memory 11 corresponds to a main storage portion of the server 1. The main memory 11 is an element constituting a computer of the server 1. The main memory 11 includes a nonvolatile memory area and a volatile memory area. The main memory 11 stores an operating system or a program in the nonvolatile memory area. The main memory 11 uses the volatile memory area as a work area in which data is appropriately rewritten by the processor 10. For example, the main memory 11 includes a read only memory (ROM) as the nonvolatile memory area. For example, the main memory 11 includes a random access memory (RAM) as the volatile memory area. The main memory 11 is an example of a storage unit of the server 1.

The auxiliary storage device 12 corresponds to an auxiliary storage portion of the server 1. The auxiliary storage device 12 is an element constituting a computer of the server 1. The auxiliary storage device 12 is an electrically erasable programmable read-only memory (EEPROM (registered trademark)), a hard disc drive (HDD), a solid-state drive (SSD), or the like. The auxiliary storage device 12 stores the above-described program, data used when the processor 10 performs various types of processing, and data generated by processing in the processor 10. The auxiliary storage device 12 is an example of a storage unit of the server 1.

The auxiliary storage device 12 can include a checkout data storage area 121. The checkout data storage area 121 can store second checkout data for each registration apparatus 2. The second checkout data is an example of checkout data for checkout for the transaction. The second checkout data is only required to be data that enables checkout for the transaction to be processed in the checkout apparatus 3, and the content of the second checkout data is not limited to any particular content. The second checkout data is data based on product registration in the registration apparatus 2. Therefore, the second checkout data is data based on the first checkout data acquired by the server 1 from the registration apparatus 2. The acquiring includes receiving. The second checkout data is an example of data related to the transaction.

In one example, the second checkout data is the same data as the first checkout data generated in the registration apparatus 2. In this example, the first checkout data and the second checkout data may be transaction data.

In another example, the second checkout data is data generated based on the first checkout data. In this example, the first checkout data may be transaction data, and the second checkout data may be data of a code uniquely indicating the transaction. The data of the code uniquely indicating the transaction is data associated with the transaction data. The server 1 generates the data of the code uniquely indicating the transaction based on acquisition of the transaction data from the registration apparatus 2.

The checkout data storage area 121 can store output destination information for each piece of second checkout data. The output destination information is information indicating the checkout apparatus 3 as the output destination for outputting the checkout data. The checkout apparatus 3 as the output destination is a checkout apparatus 3 out of the plurality of checkout apparatuses 3 capable of processing checkout for the transaction based on product registration in the registration apparatus **2.** The checkout apparatus 3 as the output destination can be determined by the image capturing apparatus 4. The second checkout data and the output destination information are associated with each other.

The communication interface 13 includes various interfaces that connect the server 1 to another electronic device so as to be able to communicate with each other via the network NW according to a predetermined communication protocol. The communication interface 13 is an example of a communication unit of the server 1.

Note that the hardware configuration of the server 1 is not limited to the above-described configuration. The server 1 can appropriately omit and change the above-described components and add a new component.

Each unit realized by the processor 10 will be described.

The processor 10 realizes a communication processing unit 101 and a storage processing unit 102. Each unit realized by the processor 10 can also be referred to as each function. Each unit realized by the processor 10 can also be referred to as each unit realized by a control unit including the processor 10 and the main memory 11.

The communication processing unit 101 processes communication between the server 1 and another electronic device via the communication interface 13. The communication processing unit 101 acquires data, information, or a signal from another electronic device via the communication interface 13. The communication processing unit 101 outputs data, information, or a signal from the server 1 to another electronic device via the communication interface 13. The outputting includes transmitting. In the description in which the communication processing unit 101 acquires or outputs data, information, a signal, or the like, the communication processing unit 101 may be replaced with the communication interface 13.

The storage processing unit 102 stores data or information in the auxiliary storage device 12. The storage processing unit 102 may store data or information in the main memory 11.

A configuration example of the registration apparatus 2 will be described.

FIG. 4 is a block diagram illustrating the registration apparatus 2.

The registration apparatus 2 is an electronic device including a processor 20, a main memory 21, an auxiliary storage device 22, a communication interface 23, a scanner 24, an input device 25, and a display device 26. The processor 20, the main memory 21, the auxiliary storage device 22, the communication interface 23, the scanner 24, the input device 25, and the display device 26 are connected so as to be able to input and output signals to and from each other. In FIG. 4, the interface is described as an "I/F".

The processor 20 corresponds to a central part of the registration apparatus 2. The processor 20 may have a similar hardware configuration to that of the processor 10 described above. The processor 20 is an example of a processing circuit of the registration apparatus 2. The processor 20 loads a program stored in advance in the main memory 21 or the auxiliary storage device 22 into the main memory 21. The program is a program capable of causing the processor 20 to execute processing of each unit to be described below realized by the processor 20. The processor 20 executes various types of processing by executing the program loaded into the main memory 21.

The main memory 21 corresponds to a main storage portion of the registration apparatus 2. The main memory 21 may have a similar hardware configuration to that of the main memory 11 described above. The main memory 21 stores a program. The main memory 21 is an example of a storage unit of the registration apparatus 2.

The auxiliary storage device 22 corresponds to an auxiliary storage portion of the registration apparatus 2. The auxiliary storage device 22 may have a similar hardware configuration to that of the auxiliary storage device 12 described above. The auxiliary storage device 22 stores the above-described program, data used when the processor 20 performs various types of processing, and data generated by processing in the processor 20. The auxiliary storage device 22 is an example of a storage unit of the registration apparatus 2.

The auxiliary storage device 22 can include a checkout data storage area 221. The checkout data storage area 221 can store first checkout data based on product registration for the transaction in the registration apparatus 2. The checkout data storage area 121 can store output destination information for the first checkout data. The first checkout data and the output destination information are associated with each other.

The communication interface 23 includes various interfaces that connect the registration apparatus 2 to another electronic device so as to be able to communicate with each other via the network NW according to a predetermined communication protocol. The communication interface 23 is an example of a communication unit of the registration apparatus 2.

The scanner 24 is a device that reads various code symbols and obtains data from the code symbols. The scanner 24 may include a scanner of a type using an imaging element such as a charge-coupled device (CCD) or may include a laser type scanner. For example, the code symbol is a barcode symbol or a two-dimensional code symbol. The code symbol may include a code symbol of a product in which a code capable of identifying the product is recorded. The code symbol of the product is an image attached to the product. The code symbol may include a code symbol in which a store member code is recorded. The code symbol of the member may be an image attached to a card or an image that can be displayed on a terminal.

The input device 25 is a device capable of inputting an instruction to the registration apparatus 2. For example, the input device 25 may include a keyboard. The input device 25 may include a touch screen formed with the display device 26.

The display device 26 is a device capable of displaying various images under the control of the processor 20. For example, the display device 26 is a liquid crystal display, an electroluminescence (EL) display, or the like. The display device 26 is an example of a display unit of the registration apparatus 2.

Note that the hardware configuration of the registration apparatus 2 is not limited to the above-described configuration. The registration apparatus 2 can appropriately omit and change the above-described components and add a new component.

Each unit realized by the processor 20 will be described.

The processor 20 realizes a communication processing unit 201, a registration processing unit 202, and a storage processing unit 203. Each unit realized by the processor 20 can also be referred to as each function. Each unit realized by the processor 20 can also be referred to as each unit realized by a control unit including the processor 20 and the main memory 21.

The communication processing unit 201 processes communication between the registration apparatus 2 and another electronic device via the communication interface 23. The communication processing unit 201 acquires data, information, or a signal from another electronic device via the communication interface 23. The communication processing unit 201 outputs data, information, or a signal from the registration apparatus 2 to another electronic device via the communication interface 23. In the description in which the communication processing unit 201 acquires or outputs data, information, a signal, or the like, the communication processing unit 201 may be replaced with the communication interface 23.

The registration processing unit 202 registers a product based on a product registration operation of each product in the transaction by the store clerk using the scanner 24 or the input device 25.

The storage processing unit 203 stores data or information in the auxiliary storage device 22. The storage processing unit 203 may store data or information in the main memory 21.

A configuration example of the checkout apparatus 3 will be described.

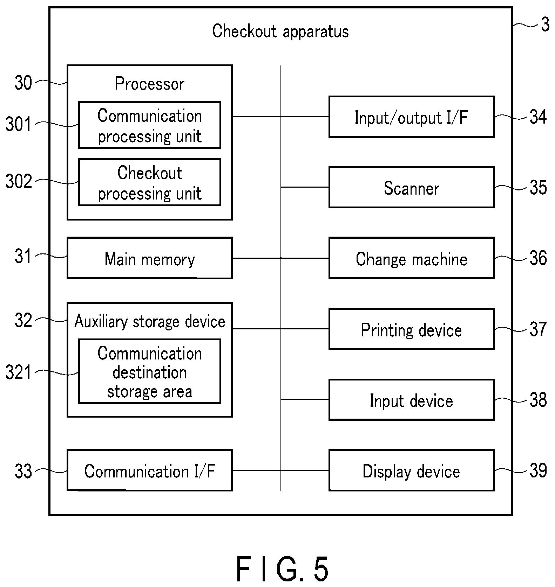

FIG. 5 is a block diagram illustrating the checkout apparatus 3.

The checkout apparatus 3 is an electronic device including a processor 30, a main memory 31, an auxiliary storage device 32, a communication interface 33, an input/output interface 34, a scanner 35, a change machine 36, a printing device 37, an input device 38, and a display device 39. The processor 30, the main memory 31, the auxiliary storage device 32, the communication interface 33, the input/output interface 34, the scanner 35, the change machine 36, the printing device 37, the input device 38, and the display device 39 are connected so as to be able to input and output signals to and from each other. In FIG. 5, the interface is described as an "I/F".

The processor 30 corresponds to a central part of the checkout apparatus 3. The processor 30 may have a similar hardware configuration to that of the processor 10 described above. The processor 30 is an example of a processing circuit of the checkout apparatus 3. The processor 30 loads a program stored in advance in the main memory 31 or the auxiliary storage device 32 into the main memory 31. The program is a program capable of causing the processor 30 to execute processing of each unit to be described below realized by the processor 30. The processor 30 executes various types of processing by executing the program loaded into the main memory 31.

The main memory 31 corresponds to a main storage portion of the checkout apparatus 3. The main memory 31 may have a similar hardware configuration to that of the main memory 31 described above. The main memory 31 stores a program. The main memory 31 is an example of a storage unit of the checkout apparatus 3.

The auxiliary storage device 32 corresponds to an auxiliary storage portion of the checkout apparatus 3. The auxiliary storage device 32 may have a similar hardware configuration to that of the auxiliary storage device 12 described above. The auxiliary storage device 32 stores the above-described program, data used when the processor 30 performs various types of processing, and data generated by processing in the processor 20. The auxiliary storage device 32 is an example of a storage unit of the checkout apparatus 3.

The auxiliary storage device 32 can include a communication destination storage area 321. The communication destination storage area 321 can store communication destination information. The communication destination information is information indicating an electronic device with which the checkout apparatus 3 communicates. The communication destination information includes information indicating the registration apparatus 2 with which the checkout apparatus 3 communicates out of the plurality of registration apparatuses 2 included in the data processing system S. The communication destination information includes information indicating the image capturing apparatus 4 with which the checkout apparatus 3 communicates out of the plurality of image capturing apparatuses 4 included in the data processing system S.

The communication destination information will be described using the registration apparatus 2-1, the checkout apparatus 3-1, the checkout apparatus 3-2**,** and the image capturing apparatus 4-1 illustrated in FIG. 2 as examples. The communication destination information stored in the checkout apparatus 3-1 includes information indicating the registration apparatus 2-1 with which the checkout apparatus 3-1 communicates out of the plurality of registration apparatuses 2 included in the data processing system S. The communication destination information stored in the checkout apparatus 3-1 includes information indicating the image capturing apparatus 4-1 with which the checkout apparatus 3-1 communicates out of the plurality of image capturing apparatuses 4 included in the data processing system S. The communication destination information stored in the checkout apparatus 3-2 includes information indicating the registration apparatus 2-1 with which the checkout apparatus 3-2 communicates out of the plurality of registration apparatuses 2 included in the data processing system S. The communication destination information stored in the checkout apparatus 3-2 includes information indicating the image capturing apparatus 4-1 with which the checkout apparatus 3-2 communicates out of the plurality of image capturing apparatuses 4 included in the data processing system S.

The communication interface 33 includes various interfaces that connect the checkout apparatus 3 to another electronic device so as to be able to communicate with each other via the network NW according to a predetermined communication protocol. The communication interface 33 is an example of a communication unit of the checkout apparatus 3.

The input/output interface 34 includes various interfaces that connect the checkout apparatus 3 to another electronic device so as to be able to communicate with each other by directly connecting the checkout apparatus 3 to the electronic device in a wired or wireless manner. For example, the input/output interface 34 connects the checkout apparatus 3 to a card reader. The card reader is a device that reads card data recorded in a magnetic stripe or an integrated circuit (IC) chip of a card medium. The card medium may include a credit card.

The scanner 35 is a device that reads various code symbols and obtains data from the code symbols. The scanner 35 may have a similar hardware configuration to that of the scanner 24 described above. For example, the code symbol may include a code symbol for code settlement.

The change machine 36 is a device that dispenses bills or coins equivalent to the amount of change.

The printing device 37 is a device for printing a receipt. For example, the printing device 37 is a thermal printer, an inkjet printer, or the like.

The input device 38 is a device capable of inputting an instruction to the checkout apparatus 3. The input device 38 may have a similar hardware configuration to that of the input device 25 described above.

The display device 39 is a device capable of displaying various images under the control of the processor 30. The display device 39 may have a similar hardware configuration to that of the display device 26 described above.

Note that the hardware configuration of the checkout apparatus 3 is not limited to the above-described configuration. The above-described components can be appropriately omitted and changed in the checkout apparatus 3 and new components can be added.

Each unit realized by the processor 30 will be described.

The processor 30 realizes a communication processing unit 301 and a checkout processing unit 302. Each unit realized by the processor 30 can also be referred to as each function. Each unit realized by the processor 30 can also be referred to as each unit realized by a control unit including the processor 30 and the main memory 31.

The communication processing unit 301 processes communication between the checkout apparatus 3 and another electronic device via the communication interface 33. The communication processing unit 301 acquires data, information, or a signal from another electronic device via the communication interface 33. The communication processing unit 301 outputs data, information, or a signal from the checkout apparatus 3 to another electronic device via the communication interface 33. In the description in which the communication processing unit 301 acquires or outputs data, information, a signal, or the like, the communication processing unit 301 may be replaced with the communication interface 33.

The checkout processing unit 302 processes checkout for the transaction based on checkout data. The checkout processing unit 302 performs checkout for the transaction in accordance with selection of a checkout method by the customer. The checkout method includes offline checkout and online checkout. Offline checkout is settlement that does not require the checkout apparatus 3 to connect with another electronic device via a network such as the Internet. For example, offline checkout is checkout with cash. Online checkout is checkout executed by causing the checkout apparatus 3 to connect with another electronic device via a network such as the Internet. For example, online checkout is checkout such as credit card settlement, electronic money settlement, debit card settlement, and code settlement.

A configuration example of the image capturing apparatus 4 will be described.

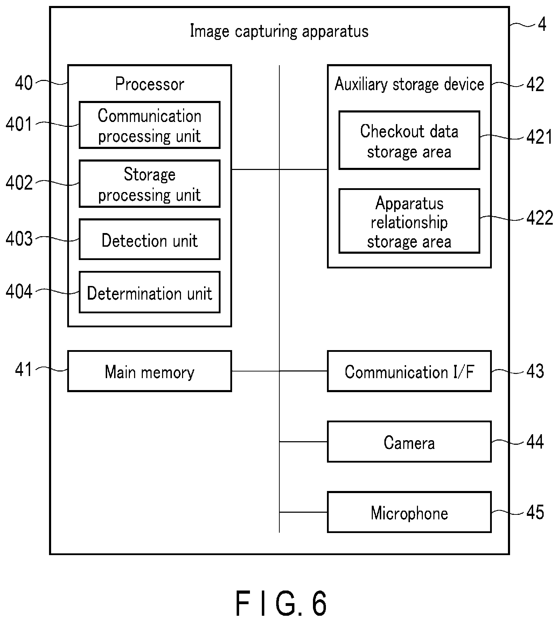

FIG. 6 is a block diagram illustrating the image capturing apparatus 4.

The image capturing apparatus 4 is an electronic device including a processor 40, a main memory 41, an auxiliary storage device 42, a communication interface 43, a camera 44, and a microphone 45. The processor 40, the main memory 41, the auxiliary storage device 42, the communication interface 43, the camera 44, and the microphone 45 are connected so as to be able to input and output signals to and from each other. In FIG. 6, the interface is described as an "I/F".

The processor 40 corresponds to a central portion of the image capturing apparatus 4. The processor 40 may have a similar hardware configuration to that of the processor 10 described above. The processor 40 is an example of a processing circuit of the image capturing apparatus 4. The processor 40 loads a program stored in advance in the main memory 41 or the auxiliary storage device 42 into the main memory 41. The program is a program capable of causing the processor 40 to execute processing of each unit to be described below realized by the processor 40. The processor 40 executes various types of processing by executing the program loaded into the main memory 41.

The main memory 41 corresponds to a main storage portion of the image capturing apparatus 4. The main memory 41 may have a similar hardware configuration to that of the main memory 41 described above. The main memory 41 stores a program. The main memory 41 is an example of a storage unit of the image capturing apparatus 4.

The auxiliary storage device 42 corresponds to an auxiliary storage portion of the image capturing apparatus 4. The auxiliary storage device 42 may have a similar hardware configuration to that of the auxiliary storage device 12 described above. The auxiliary storage device 42 stores the above-described program, data used when the processor 20 performs various types of processing, and data generated by processing in the processor 40. The auxiliary storage device 42 is an example of a storage unit of the image capturing apparatus 4.

The auxiliary storage device 42 can include a checkout data storage area 421. The checkout data storage area 421 can store third checkout data for the registration apparatus 2 operated by the store clerk captured by the image capturing apparatus 4. The third checkout data is an example of checkout data for checkout for the transaction. The third checkout data is only required to be data that enables checkout for the transaction to be processed in the checkout apparatus 3, and the content of the third checkout data is not limited to any particular content. The third checkout data is data based on product registration in the registration apparatus 2. Therefore, the third checkout data is data based on the first checkout data acquired by the image capturing apparatus 4 from the registration apparatus 2. The third checkout data is an example of data related to the transaction. For example, the third checkout data is the same data as the first checkout data generated in the registration apparatus 2. In this example, the first checkout data and the third checkout data may be transaction data. The checkout data storage area 421 can store output destination information for the third checkout data. The third checkout data and the output destination information are associated with each other.

The auxiliary storage device 42 can include an apparatus relationship storage area 422. The apparatus relationship storage area 422 can store apparatus relationship data. The apparatus relationship data is data in which one registration apparatus 2 associated with the image capturing apparatus 4 is associated with a plurality of checkout apparatuses 3 capable of processing checkout for the transaction based on product registration in the registration apparatus 2. The apparatus relationship data includes data indicating movement of the store clerk associated with each of the plurality of checkout apparatuses 3. The movement of the store clerk is movement indicating each of the plurality of checkout apparatuses 3 associated with one registration apparatus. Therefore, the movements of the store clerk are different for the plurality of corresponding checkout apparatuses 3 associated with one registration apparatus. For example, the movement of the store clerk is a gesture such as a gesture or a hand movement, but is not limited thereto.

The apparatus relationship data will be described using the registration apparatus 2-1, the checkout apparatus 3-1, and the checkout apparatus 3-2 illustrated in FIG. 2 as examples. The apparatus relationship data includes data in which one registration apparatus 2-1 associated with the image capturing apparatus 4-1 is associated with two checkout apparatuses 3-1 and 3-2 capable of processing checkout for the transaction based on product registration in the registration apparatus 2-1**.** The apparatus relationship data includes data indicating the movements of the store clerk UA associated with the checkout apparatus 3-1 and the checkout apparatus 3-2 respectively. The movements of the store clerk UA associated with the checkout apparatus 3-1 and the checkout apparatus 3-2 respectively are different from each other. The movement of the store clerk UA associated with the checkout apparatus 3-1 may be a movement of holding out the right hand. The movement of the store clerk UA associated with the checkout apparatus 3-2 may be a movement of holding out the left hand.

The communication interface 43 includes various interfaces that connect the image capturing apparatus 4 to another electronic device so as to be able to communicate with each other via the network NW according to a predetermined communication protocol. The communication interface 43 is an example of a communication unit of the image capturing apparatus 4.

The camera 44 is a device that acquires image capturing data based on image capturing.

The microphone 45 is a device that acquires audio data based on sound collection.

Note that the hardware configuration of the image capturing apparatus 4 is not limited to the above-described configuration. The image capturing apparatus 4 can appropriately omit and change the above-described components and add a new component.

Each unit realized by the processor 40 will be described.

The processor 40 realizes a communication processing unit 401, a storage processing unit 402, a detection unit 403, and a determination unit 404. Each unit realized by the processor 40 can also be referred to as each function. Each unit realized by the processor 40 can also be referred to as each unit realized by a control unit including the processor 40 and the main memory 41.

The communication processing unit 401 processes communication between the image capturing apparatus 4 and another electronic device via the communication interface 43. The communication processing unit 401 acquires data, information, or a signal from another electronic device via the communication interface 43. The communication processing unit 401 outputs data, information, or a signal from the image capturing apparatus 4 to another electronic device via the communication interface 43. In the description in which the communication processing unit 401 acquires or outputs data, information, a signal, or the like, the communication processing unit 401 may be replaced with the communication interface 43.

The storage processing unit 402 stores data or information in the auxiliary storage device 42. The storage processing unit 402 may store data or information in the main memory 41.

The detection unit 403 detects a movement of the store clerk based on the image capturing data.

The determination unit 404 determines the checkout apparatus 3 as an output destination for outputting the checkout data according to the movement of the store clerk based on the image capturing data.

The apparatus relationship data will be described.

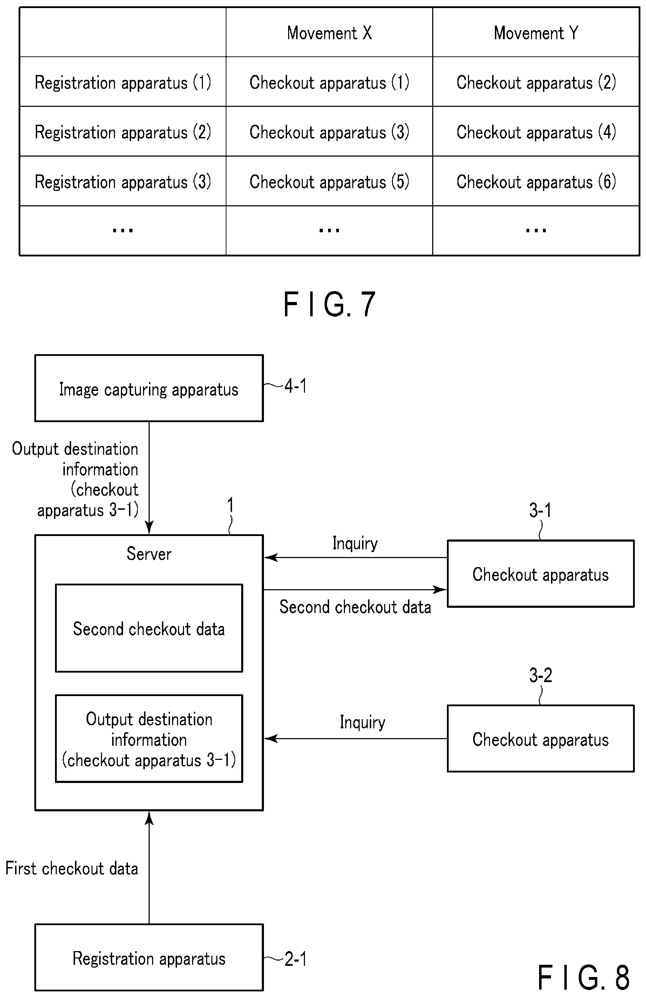

FIG. 7 is a diagram illustrating a data structure of the apparatus relationship data stored in the image capturing apparatus 4.

Each registration apparatus 2 is associated with two checkout apparatuses 3. The two checkout apparatuses 3 are associated with a movement X and a movement Y, respectively. The movement X and the movement Y are different movements of the store clerk.

### (Operation example)

An operation example of the data processing system S configured as described above will be described.

Here, description will be provided using the server 1, and the registration apparatus 2-1, the checkout apparatus 3-1, the checkout apparatus 3-2, and the image capturing apparatus 4-1 illustrated in FIG. 2 as examples.

Note that the processing procedure described below is merely an example, and each piece of processing may be changed as much as possible. In addition, regarding the processing procedure described below, steps can appropriately be omitted, replaced, and added depending on the embodiment.

### (First operation example)

A first operation example will be described.

The first operation example is an example in which the server 1 stores checkout data and output destination information.

FIG. 8 is a diagram illustrating the first operation example of the data processing system S.

The registration apparatus 2-1 generates first checkout data based on product registration for a transaction of the customer UB. The registration apparatus 2-1 outputs the first checkout data to the server 1.

The image capturing apparatus 4-1 detects a movement of the store clerk UA based on image capturing data. The image capturing apparatus 4-1 determines the checkout apparatus 3 as an output destination for outputting second checkout data according to the movement of the store clerk UA. Here, it is assumed that the store clerk UA makes a movement to hold out the right hand, and the image capturing apparatus 4-1 determines the checkout apparatus 3-1, out of the checkout apparatus 3-1 and the checkout apparatus 3-2, as the output destination. The image capturing apparatus 4-1 outputs to the server 1 output destination information indicating that the checkout apparatus 3-1 is the output destination.

The server 1 acquires the first checkout data from the registration apparatus 2-1. The server 1 stores the second checkout data based on the first checkout data in the auxiliary storage device 12 based on the acquisition of the first checkout data. The server 1 acquires the output destination information from the image capturing apparatus 4-1. The server 1 stores the output destination information in the auxiliary storage device 12 based on the acquisition of the output destination information.

The server 1 periodically and repeatedly acquires an inquiry from each of the checkout apparatus 3-1 and the checkout apparatus 3-2. The inquiry is a signal for confirming whether there is checkout data the output destination of which is its own apparatus. The inquiry can also be referred to as a signal for requesting checkout data the output destination of which is its own apparatus in a case where there is checkout data the output destination of which is its own apparatus. The server 1 outputs the second checkout data to the checkout apparatus 3-1 as the output destination based on the inquiry from the checkout apparatus 3-1 as the output destination to the server 1. Note that, in this case, even in a case where the server 1 acquires the inquiry from the checkout apparatus 3-2 to the server 1, the server 1 does not output the second checkout data to the checkout apparatus 3-2.

Processing by the registration apparatus 2-1 in the first operation example will be described.

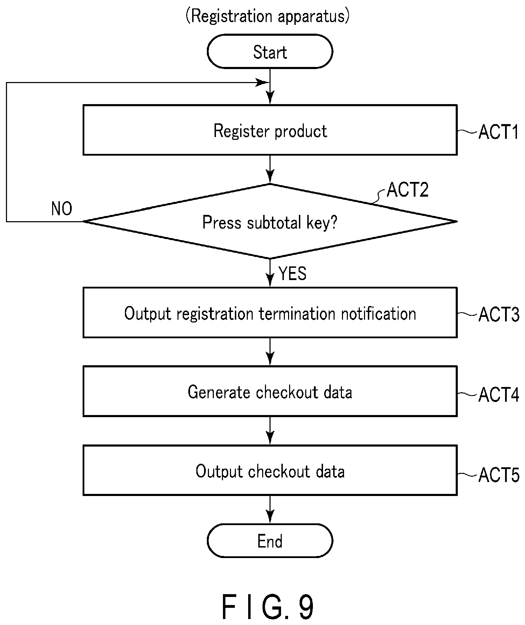

FIG. 9 is a flowchart illustrating a procedure of processing by the processor 20 of the registration apparatus 2-1 in the first operation example.

The registration processing unit 202 registers a product based on a product registration operation of the product in a transaction by the store clerk UA using the scanner 24 or the input device 25 (ACT 1). In ACT 1, for example, the registration processing unit 202 acquires product data from the auxiliary storage device 22, the server 1, or the like based on a code capable of identifying the product input using the scanner 24 or the input device 25. The registration processing unit 202 registers the product data in the main memory 21 or the auxiliary storage device 22.

The registration processing unit 202 detects that the store clerk UA presses a subtotal key using the input device 25 (ACT 2). The subtotal key is a key for inputting an instruction regarding termination of product registration for the transaction in order to calculate a charged amount of the transaction. Pressing the subtotal key is an example of inputting the instruction regarding termination of product registration for the transaction. In a case where the subtotal key is not pressed in the registration apparatus 2-1 (ACT 2, NO), the registration processing unit 202 continues the processing in ACT 1. In a case where the subtotal key is pressed in the registration apparatus 2-1 (ACT 2, YES), the processing proceeds from ACT 2 to ACT 3.

In a case where the subtotal key is pressed in the registration apparatus 2-1, the communication processing unit 201 outputs a registration termination notification from the registration apparatus 2-1 to the image capturing apparatus 4-1 (ACT 3). The registration termination notification is a notification related to termination of product registration for the transaction in the registration apparatus 2-1. For example, the registration termination notification is a notification indicating that the subtotal key is pressed in the registration apparatus 2-1. The notification may be replaced with a signal.

In a case where the subtotal key is pressed in the registration apparatus 2-1, the registration processing unit 202 generates first checkout data based on the product registration for the transaction of the customer UB (ACT 4). In ACT 4, for example, the registration processing unit 202 generates the first checkout data based on product data for each registered product 92 in the transaction.

In a case where the subtotal key is pressed in the registration apparatus 2-1, the communication processing unit 201 outputs the first checkout data from the registration apparatus 2-1 to the server 1 (ACT 5).

Processing by the image capturing apparatus 4-1 in the first operation example will be described.

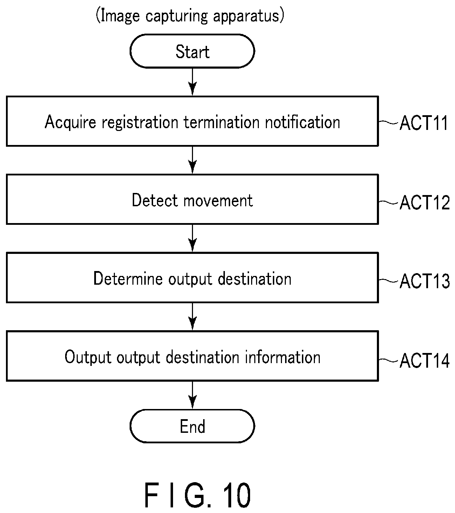

FIG. 10 is a flowchart illustrating a procedure of processing by the processor 40 of the image capturing apparatus 4-1 in the first operation example.

The communication processing unit 401 acquires a registration termination notification from the registration apparatus 2-1 (ACT 11).

The detection unit 403 detects a movement of the store clerk UA based on image capturing data (ACT 12). In ACT 12, for example, the detection unit 403 detects the movement of the store clerk UA based on the acquisition of the registration termination notification by the communication processing unit 401. Therefore, the detection unit 403 detects the movement of the store clerk UA based on the image capturing data after the subtotal key is pressed in the registration apparatus 2-1**.** It is assumed that the store clerk UA has made a movement to hold out the right hand.

The determination unit 404 determines the checkout apparatus 3 as an output destination for outputting second checkout data according to the movement of the store clerk UA based on the image capturing data detected by the detection unit 403 (ACT 13). In ACT 13, for example, the determination unit 404 determines the checkout apparatus 3 associated with the store clerk UA detected by the detection unit 403 in apparatus relationship data as the checkout apparatus 3 as the output destination. The determination unit 404 determines the checkout apparatus 3 as the output destination based on the acquisition of the registration termination notification by the communication processing unit 401. Therefore, the determination unit 404 determines the checkout apparatus 3 as the output destination according to the movement of the store clerk UA after the subtotal key is pressed in the registration apparatus 2-1. It is assumed that the checkout apparatus 3 as the output destination for outputting the second checkout data is the checkout apparatus 3-1.

In a case where the checkout apparatus 3 as the output destination is determined by the determination unit 404, the communication processing unit 401 outputs from the image capturing apparatus 4-1 to the server 1 output destination information indicating that the checkout apparatus 3-1 is the output destination (ACT 14).

Processing by the server 1 in the first operation example will be described.

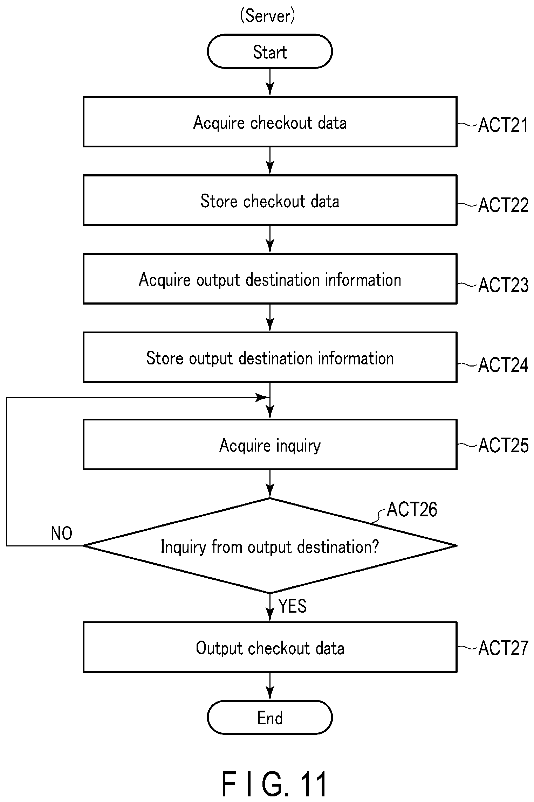

FIG. 11 is a flowchart illustrating a procedure of processing by the processor 10 of the server 1 in the first operation example.

The communication processing unit 101 acquires first checkout data from the registration apparatus 2-1 (ACT 21).

The storage processing unit 102 stores second checkout data in the auxiliary storage device 12 of the server 1 (ACT 22). In ACT 22, for example, the storage processing unit 102 stores the second checkout data in the auxiliary storage device 12 based on first checkout data. The storage processing unit 102 may store the second checkout data, which is the same data as the first checkout data, in the auxiliary storage device 12. The storage processing unit 102 may store the second checkout data generated based on the first checkout data in the auxiliary storage device 12.

Note that, as described above, in a case where the subtotal key is pressed in the registration apparatus 2-1, the registration apparatus 2-1 outputs the first checkout data to the server 1. The storage processing unit 102 stores the second checkout data in the auxiliary storage device 12 based on the acquisition of the first checkout data by the communication processing unit 101. Therefore, in a case where the subtotal key is pressed in the registration apparatus 2-1, the storage processing unit 102 stores the second checkout data in the auxiliary storage device 12. The storage processing unit 102 may store the second checkout data in the main memory 11.

The communication processing unit 101 acquires output destination information from the image capturing apparatus 4-1 (ACT 23).

The storage processing unit 102 stores the output destination information in the auxiliary storage device 12 (ACT 24). Note that, as described above, in a case where the checkout apparatus 3 as the output destination is determined by the determination unit 404, the image capturing apparatus 4-1 outputs the output destination information to the server 1**.** The storage processing unit 102 stores the output destination information in the auxiliary storage device 12 based on the acquisition of the output destination information by the communication processing unit 101. Therefore, in a case where the checkout apparatus 3 as the output destination is determined by the determination unit 404, the storage processing unit 102 stores the output destination information in the auxiliary storage device 12. The storage processing unit 102 may store the output destination information in the main memory 11.

The communication processing unit 101 acquires an inquiry to the server 1 from each of the checkout apparatus 3-1 and the checkout apparatus 3-2 (ACT 25).

The communication processing unit 101 determines whether the inquiry is from the output destination based on the output destination information (ACT 26). In a case where the inquiry is not from the checkout apparatus 3-1 as the output destination (ACT 26, NO), the communication processing unit 101 continues the processing in ACT 25. In a case where the inquiry is from the checkout apparatus 3-1 as the output destination (ACT 26, YES), the processing proceeds from ACT 26 to ACT 27.

The communication processing unit 101 outputs the second checkout data from the server 1 to the checkout apparatus 3-1 as the output destination based on the inquiry from the checkout apparatus 3-1 as the output destination to the server 1 (ACT 27). Note that outputting the second checkout data is performed after storing the output destination information. Therefore, the communication processing unit 101 outputs the second checkout data from the server 1 to the checkout apparatus 3-1 as the output destination based on the inquiry from the checkout apparatus 3-1 as the output destination to the server 1 after the output destination information is stored in the auxiliary storage device 12 by the storage processing unit 102.

Processing by the checkout apparatus 3-1 in the first operation example will be described.

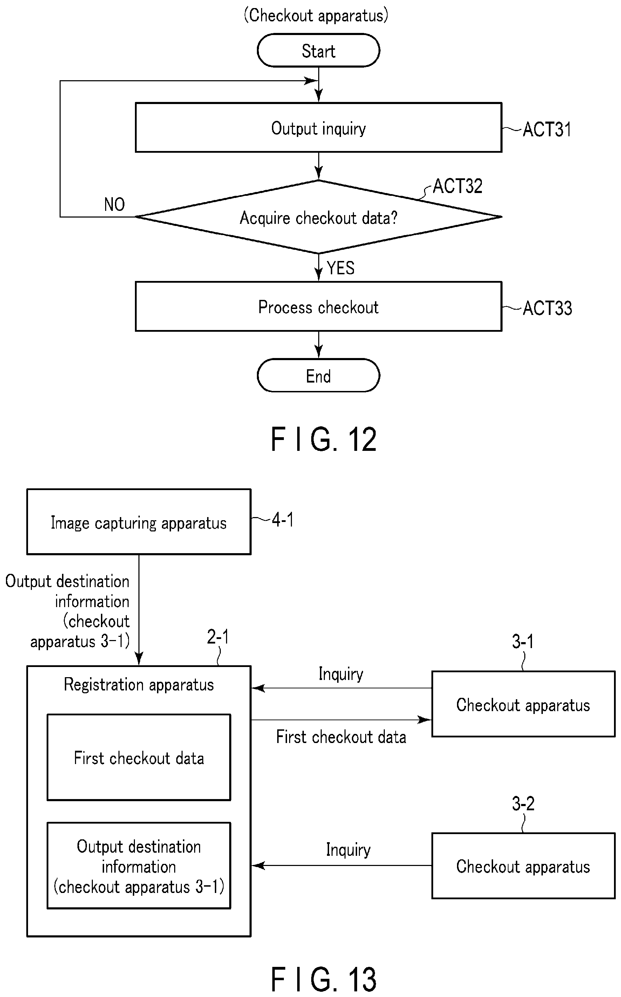

FIG. 12 is a flowchart illustrating a procedure of processing by the processor 30 of the checkout apparatus 3-1 in the first operation example.

The communication processing unit 301 periodically and repeatedly outputs an inquiry from the checkout apparatus 3-1 to the server 1 (ACT 31).

The communication processing unit 301 acquires second checkout data from the server 1 as a response to the inquiry (ACT 32). In a case where the communication processing unit 301 does not acquire the second checkout data from the server 1 (ACT 32, NO), the communication processing unit 301 continues the processing in ACT 31. In a case where the communication processing unit 301 acquires the second checkout data from the server 1 (ACT 32, YES), the processing proceeds from ACT 32 to ACT 33.

The checkout processing unit 302 processes checkout for a transaction based on the second checkout data (ACT 33). In ACT 33, for example, the checkout processing unit 302 processes checkout for the transaction based on the second checkout data according to a checkout method selected by the customer UB using the input device 38. Note that, in a case where the second checkout data is data of a code uniquely indicating the transaction, the communication processing unit 301 acquires data necessary for checkout from the server 1 via the network NW based on the second checkout data.

Note that the processing by the checkout apparatus 3-2 in the first operation example is similar to the processing by the checkout apparatus 3-1 in the first operation example, and thus the description thereof will be omitted.

Note that, in the first operation example, the processor 10 of the server 1 may realize a detection unit and a determination unit similar to the detection unit 403 and the determination unit 404. In this example, the communication processing unit 101 may acquire image capturing data from the image capturing apparatus 4-1.

In the first operation example, the data processing system S can include the server 1 including at least the communication processing unit 101 and the storage processing unit 102, and the image capturing apparatus 4-1 including at least the determination unit 404. The data processing system S can include the server 1 including at least the communication processing unit 101, the storage processing unit 102, and the determination unit.

### (Second operation example)

A second operation example will be described.

The second operation example is an example in which the registration apparatus 2-1 stores checkout data and output destination information. FIG. 13 is a diagram illustrating the second operation example of the data processing system S.

The image capturing apparatus 4-1 detects a movement of the store clerk UA based on image capturing data. The image capturing apparatus 4-1 determines the checkout apparatus 3 as an output destination for outputting first checkout data according to the movement of the store clerk UA. Here, it is assumed that the store clerk UA makes a movement to hold out the right hand, and the image capturing apparatus 4-1 determines the checkout apparatus 3-1, out of the checkout apparatus 3-1 and the checkout apparatus 3-2, as the output destination. The image capturing apparatus 4-1 outputs to the registration apparatus 2-1 output destination information indicating that the checkout apparatus 3-1 is the output destination.

The registration apparatus 2-1 generates first checkout data based on product registration for a transaction of the customer UB. The registration apparatus 2-1 stores the first checkout data in the auxiliary storage device 22. The registration apparatus 2-1 acquires the output destination information from the image capturing apparatus 4-1. The registration apparatus 2-1 stores the output destination information in the auxiliary storage device 22 based on the acquisition of the output destination information.

The registration apparatus 2-1 periodically and repeatedly acquires an inquiry from each of the checkout apparatus 3-1 and the checkout apparatus 3-2. The registration apparatus 2-1 outputs the first checkout data to the checkout apparatus 3-1 as the output destination based on the inquiry from the checkout apparatus 3-1 as the output destination to the registration apparatus 2-1. Note that, in this case, even in a case where the registration apparatus 2-1 acquires the inquiry from the checkout apparatus 3-2 to the registration apparatus 2-1, the registration apparatus 2-1 does not output the first checkout data to the checkout apparatus 3-2.

Processing by the registration apparatus 2-1 in the second operation example will be described.

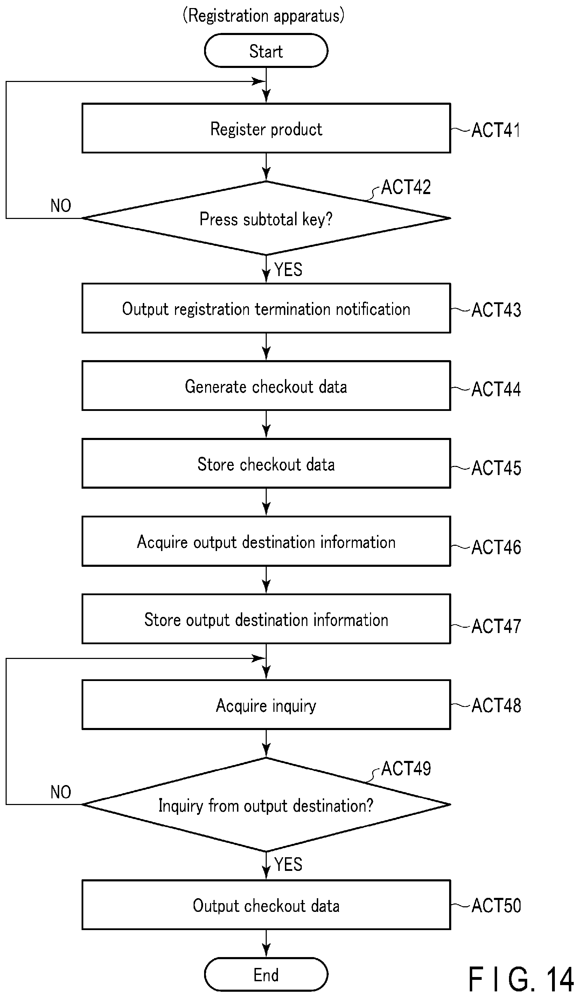

FIG. 14 is a flowchart illustrating a procedure of processing by the processor 20 of the registration apparatus 2-1 in the second operation example.

The registration processing unit 202 registers a product based on a product registration operation of the product in a transaction by the store clerk UA using the scanner 24 or the input device 25 (ACT 41). The processing in ACT 41 is similar to the processing in ACT 1 described above.

The registration processing unit 202 detects that the store clerk UA presses a subtotal key using the input device 25 (ACT 42). The processing in ACT 42 is similar to the processing in ACT 2 described above. In a case where the subtotal key is not pressed in the registration apparatus 2-1 (ACT 42, NO), the registration processing unit 202 continues the processing in ACT 41. In a case where the subtotal key is pressed in the registration apparatus 2-1 (ACT 42, YES), the processing proceeds from ACT 42 to ACT 43.

In a case where the subtotal key is pressed in the registration apparatus 2-1, the communication processing unit 201 outputs a registration termination notification from the registration apparatus 2-1 to the image capturing apparatus 4-1 (ACT 43). The processing in ACT 43 is similar to the processing in ACT 3.

In a case where the subtotal key is pressed in the registration apparatus 2-1, the registration processing unit 202 generates first checkout data based on the product registration for the transaction of the customer UB (ACT 44). The processing in ACT 44 is similar to the processing in ACT 4 described above.

In a case where the subtotal key is pressed in the registration apparatus 2-1, the storage processing unit 203 stores the first checkout data in the auxiliary storage device 22 (ACT 45). The storage processing unit 203 may store the first checkout data in the main memory 21.

The communication processing unit 201 acquires output destination information from the image capturing apparatus 4-1 (ACT 46).

The storage processing unit 203 stores the output destination information in the auxiliary storage device 22 (ACT 47). Note that, in a case where the checkout apparatus 3 as the output destination is determined by the determination unit 404, the image capturing apparatus 4-1 outputs the output destination information to the registration apparatus 2-1. The storage processing unit 203 stores the output destination information in the auxiliary storage device 22 based on the acquisition of the output destination information by the communication processing unit 201. Therefore, in a case where the checkout apparatus 3 as the output destination is determined by the determination unit 404, the storage processing unit 203 stores the output destination information in the auxiliary storage device 22. The storage processing unit 203 may store the output destination information in the main memory 21.

The communication processing unit 201 acquires an inquiry to the registration apparatus 2-1 from each of the checkout apparatus 3-1 and the checkout apparatus 3-2 (ACT 48).

The communication processing unit 201 determines whether the inquiry is from the output destination based on the output destination information (ACT 49). In a case where the inquiry is not from the checkout apparatus 3-1 as the output destination (ACT 49, NO), the communication processing unit 201 continues the processing in ACT 48. In a case where the inquiry is from the checkout apparatus 3-1 as the output destination (ACT 49, YES), the processing proceeds from ACT 49 to ACT 50.

The communication processing unit 201 outputs the first checkout data from the registration apparatus 2-1 to the checkout apparatus 3-1 as the output destination based on the inquiry from the checkout apparatus 3-1 as the output destination to the registration apparatus 2-1 (ACT 50). Note that outputting the first checkout data is performed after storing the output destination information. Therefore, the communication processing unit 201 outputs the first checkout data from the registration apparatus 2-1 to the checkout apparatus 3-1 as the output destination based on the inquiry from the checkout apparatus 3-1 as the output destination to the registration apparatus 2-1 after the output destination information is stored in the auxiliary storage device 22 by the storage processing unit 203.

Processing by the image capturing apparatus 4-1 in the second operation example will be described.

The processing by the image capturing apparatus 4-1 in the second operation example is similar to the processing by the image capturing apparatus 4-1 in the first operation example described using the flowchart illustrated in FIG. 10 except for the following points. In ACT 13, the determination unit 404 determines the checkout apparatus 3 as the output destination for outputting the second checkout data in the first operation example, but determines the checkout apparatus 3 as the output destination for outputting the first checkout data in the second operation example. In ACT 14, the communication processing unit 401 outputs the output destination information to the server 1 in the first operation example, but outputs the output destination information to the registration apparatus 2-1 in the second operation example.

Processing by the checkout apparatus 3-1 in the second operation example will be described.

The processing by the checkout apparatus 3-1 in the second operation example is similar to the processing by the checkout apparatus 3-1 in the first operation example described using the flowchart illustrated in FIG. 12 except for the following points. In ACT 31, the communication processing unit 301 outputs the inquiry to the server 1 in the first operation example, but outputs the inquiry to the registration apparatus 2-1 in the second operation example. Note that, in the second operation example, the communication processing unit 301 can determine, out of the plurality of registration apparatuses 2, the registration apparatus 2-1 as the registration apparatus 2 with which the checkout apparatus 3-1 communicates based on the communication destination information stored in the auxiliary storage device 32. In ACT 32, the communication processing unit 301 acquires the second checkout data from the server 1 in the first operation example, but acquires the first checkout data from the registration apparatus 2-1 in the second operation example. In ACT 33, the checkout processing unit 302 processes checkout for the transaction based on the second checkout data in the first operation example, but processes checkout for the transaction based on the first checkout data in the second operation example.

Note that the processing by the checkout apparatus 3-2 in the second operation example is similar to the processing by the checkout apparatus 3-1 in the second operation example, and thus the description thereof will be omitted.

Note that, in the second operation example, the processor 20 of the registration apparatus 2-1 may realize a detection unit and a determination unit similar to the detection unit 403 and the determination unit 404. In this example, the communication processing unit 201 may acquire image capturing data from the image capturing apparatus 4-1.

In the second operation example, the data processing system S can include the registration apparatus 2-1 including at least the communication processing unit 201 and the storage processing unit 203, and the image capturing apparatus 4-1 including at least the determination unit 404. The data processing system S can include the registration apparatus 2-1 including at least the communication processing unit 201, the storage processing unit 203, and the determination unit.

### (Third operation example)

A third operation example will be described.

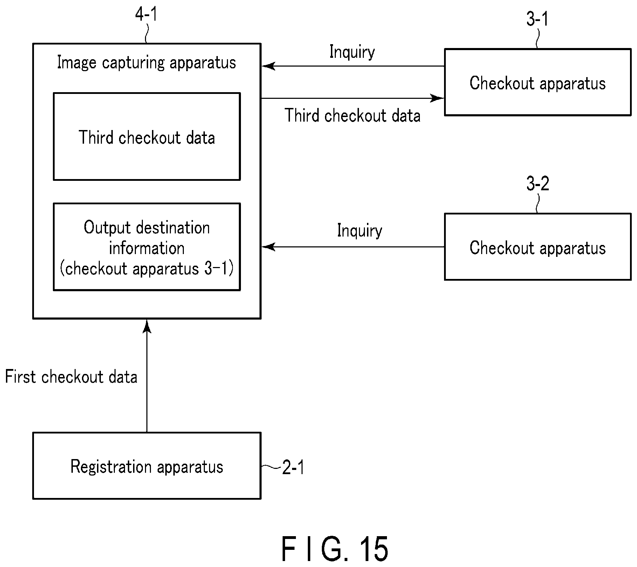

The third operation example is an example in which the image capturing apparatus 4-1 stores checkout data and output destination information. FIG. 15 is a diagram illustrating the third operation example of the data processing system S.

The registration apparatus 2-1 generates first checkout data based on product registration for a transaction of the customer UB. The registration apparatus 2-1 outputs the first checkout data to the image capturing apparatus 4-1.

The image capturing apparatus 4-1 acquires the first checkout data from the registration apparatus 2-1. The image capturing apparatus 4-1 stores third checkout data based on the first checkout data in the auxiliary storage device 32 based on the acquisition of the first checkout data. The image capturing apparatus 4-1 detects a movement of the store clerk UA based on image capturing data. The image capturing apparatus 4-1 determines the checkout apparatus 3 as an output destination for outputting the third checkout data according to the movement of the store clerk UA. The image capturing apparatus 4-1 stores output destination information in the auxiliary storage device 42.

The image capturing apparatus 4-1 periodically and repeatedly acquires an inquiry from each of the checkout apparatus 3-1 and the checkout apparatus 3-2. The image capturing apparatus 4-1 outputs the third checkout data to the checkout apparatus 3-1 as the output destination based on the inquiry from the checkout apparatus 3-1 as the output destination to the image capturing apparatus 4-1. Note that, in this case, even in a case where the image capturing apparatus 4-1 acquires the inquiry from the checkout apparatus 3-2 to the image capturing apparatus 4-1, the image capturing apparatus 4-1 does not output the third checkout data to the checkout apparatus 3-2.

Processing by the registration apparatus 2-1 in the third operation example will be described.

The processing by the registration apparatus 2-1 in the third operation example is similar to the processing by the registration apparatus 2-1 in the first operation example described using the flowchart illustrated in FIG. 9 except for the following points. In ACT 5, the communication processing unit 201 outputs the first checkout data to the server 1 in the first operation example, but outputs the first checkout data to the image capturing apparatus 4-1 in the third operation example.

Processing by the image capturing apparatus 4-1 in the third operation example will be described.

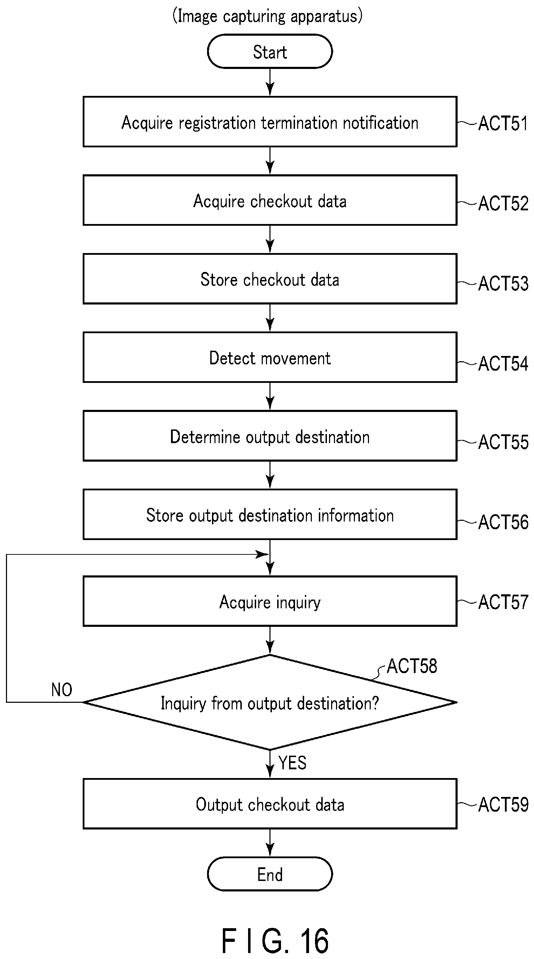

FIG. 16 is a flowchart illustrating a procedure of processing by the processor 40 of the image capturing apparatus 4-1 in the third operation example.

The communication processing unit 401 acquires a registration termination notification from the registration apparatus 2-1 (ACT 51). The processing in ACT 51 is similar to the processing in ACT 11 described above.

The communication processing unit 401 acquires first checkout data from the registration apparatus 2-1 (ACT 52).

The storage processing unit 402 stores third checkout data in the auxiliary storage device 42 of the image capturing apparatus 4-1 (ACT 53). In ACT 53, for example, the storage processing unit 402 stores the third checkout data in the auxiliary storage device 42 based on second checkout data. The storage processing unit 402 may store the third checkout data, which is the same data as the first checkout data, in the auxiliary storage device 42.

Note that, as described above, in a case where the subtotal key is pressed in the registration apparatus 2-1, the registration apparatus 2-1 outputs the first checkout data to the image capturing apparatus 4-1. The storage processing unit 402 stores the third checkout data in the auxiliary storage device 42 based on the acquisition of the first checkout data by the communication processing unit 401. Therefore, in a case where the subtotal key is pressed in the registration apparatus 2-1, the storage processing unit 402 stores the third checkout data in the auxiliary storage device 42. The storage processing unit 402 may store the third checkout data in the main memory 41.

The detection unit 403 detects a movement of the store clerk UA based on image capturing data (ACT 54).

The determination unit 404 determines the checkout apparatus 3 as an output destination for outputting second checkout data according to the movement of the store clerk UA based on the image capturing data detected by the detection unit 403 (ACT 55). The processing in ACT 55 is similar to the processing in ACT 13 described above.

In a case where the checkout apparatus 3 as the output destination is determined by the determination unit 404, the storage processing unit 402 stores in the auxiliary storage device 42 output destination information indicating that the checkout apparatus 3-1 is the output destination (ACT 56). The storage processing unit 402 may store the output destination information in the main memory 41.

The communication processing unit 401 acquires an inquiry to the image capturing apparatus 4-1 from each of the checkout apparatus 3-1 and the checkout apparatus 3-2 (ACT 57).

The communication processing unit 401 determines whether the inquiry is from the output destination based on the output destination information (ACT 58). In a case where the inquiry is not from the checkout apparatus 3-1 as the output destination (ACT 58, NO), the communication processing unit 401 continues the processing in ACT 57. In a case where the inquiry is from the checkout apparatus 3-1 as the output destination (ACT 58, YES), the processing proceeds from ACT 58 to ACT 59.

The communication processing unit 401 outputs the third checkout data from the image capturing apparatus 4-1 to the checkout apparatus 3-1 as the output destination based on the inquiry from the checkout apparatus 3-1 as the output destination to the image capturing apparatus 4-1 (ACT 59). Note that outputting the third checkout data is performed after storing the output destination information. Therefore, the communication processing unit 401 outputs the third checkout data from the image capturing apparatus 4-1 to the checkout apparatus 3-1 as the output destination based on the inquiry from the checkout apparatus 3-1 as the output destination to the image capturing apparatus 4-1 after the output destination information is stored in the auxiliary storage device 42 by the storage processing unit 402.

Processing by the checkout apparatus 3-1 in the third operation example will be described.

The processing by the checkout apparatus 3-1 in the third operation example is similar to the processing by the checkout apparatus 3-1 in the first operation example described using the flowchart illustrated in FIG. 12 except for the following points. In ACT 31, the communication processing unit 301 outputs the inquiry to the server 1 in the first operation example, but outputs the inquiry to the image capturing apparatus 4-1 in the third operation example. Note that, in the third operation example, the communication processing unit 301 can determine, out of the plurality of image capturing apparatuses 4, the image capturing apparatus 4-1 as the image capturing apparatus 4 with which the checkout apparatus 3-1 communicates based on the communication destination information stored in the auxiliary storage device 32. In ACT 32, the communication processing unit 301 acquires the second checkout data from the server 1 in the first operation example, but acquires the third checkout data from the image capturing apparatus 4-1 in the third operation example. In ACT 33, the checkout processing unit 302 processes checkout for the transaction based on the second checkout data in the first operation example, but processes checkout for the transaction based on the third checkout data in the third operation example.

In the third operation example, the data processing system S can include the image capturing apparatus 4-1 including at least the communication processing unit 401, the storage processing unit 402, and the determination unit 404.

### (Effects)

A data processing system according to an embodiment includes a storage processing unit configured to store data related to a transaction based on product registration in a registration apparatus in a storage unit of the registration apparatus or an electronic device different from the registration apparatus. The data processing system includes a determination unit configured to determine a checkout apparatus as an output destination for outputting the data related to the transaction according to a movement of a user of the registration apparatus based on sensing data. In a case where the checkout apparatus as the output destination is determined by the determination unit, the storage processing unit stores information indicating the checkout apparatus as the output destination in the storage unit.

The data processing system can store information regarding the output destination determined according to the movement of the store clerk in the storage unit configured to store the data regarding the transaction without requiring the store clerk to perform an operation for designating the checkout apparatus in the registration apparatus. The data processing system can appropriately manage the output destination for outputting the data related to the transaction by storing the data related to the transaction and the information indicating the checkout apparatus as the output destination in the storage unit. The store clerk can dispense with an operation for designating the checkout apparatus with which the customer performs checkout after visually confirming the states of the plurality of checkout apparatuses. Therefore, the data processing system can reduce the load on the store clerk who operates the registration apparatus.

The data processing system according to the embodiment includes a communication processing unit configured to output the data related to the transaction from the electronic device to the checkout apparatus as the output destination based on an inquiry from the checkout apparatus as the output destination to the electronic device.

Since the data processing system outputs the data related to the transaction based on the inquiry from the checkout apparatus as the output destination, the data processing system does not output the data related to the transaction to the checkout apparatus which is not the output destination. Therefore, the data processing system can appropriately manage the movement of the data related to the transaction from the registration apparatus to the checkout apparatus.

In the data processing system according to the embodiment, the communication processing unit acquires an inquiry to the electronic device from each of a plurality of checkout apparatuses, and outputs the data related to the transaction from the electronic device to the checkout apparatus as the output destination based on the inquiry from the checkout apparatus as the output destination out of the plurality of checkout apparatuses to the electronic device.

Even in a case where the data processing system acquires the inquiry from each of the plurality of checkout apparatuses, the data processing system outputs the data related to the transaction to the checkout apparatus as the output destination out of the plurality of checkout apparatuses. Therefore, the data processing system can appropriately manage the movement of the data related to the transaction from the registration apparatus to the checkout apparatus.

In the data processing system according to the embodiment, the communication processing unit outputs the data related to the transaction from the electronic device to the checkout apparatus as the output destination based on the inquiry from the checkout apparatus as the output destination to the electronic device after the information indicating the checkout apparatus as the output destination is stored in the storage unit by the storage processing unit. The data processing system does not output the data related to the transaction before the information regarding the output destination is stored in the storage unit. Therefore, the data processing system can appropriately manage the movement of the data related to the transaction from the registration apparatus to the checkout apparatus.

In the data processing system according to the embodiment, in a case where an instruction regarding termination of the product registration for the transaction is input in the registration apparatus, the storage processing unit stores the data related to the transaction in the storage unit. The determination unit determines the checkout apparatus as the output destination according to the movement of the user after the instruction is input in the registration apparatus.

Since the store clerk performs the movement to designate the checkout apparatus as the output destination after inputting the instruction regarding the termination of the product registration for the transaction, the data processing system determines the checkout apparatus as the output destination according to the movement of the store clerk after inputting the instruction, and can thus appropriately determine the checkout apparatus as the output destination.

The data processing system according to the above-described embodiment may be expressed as follows.
(1) A data processing system including
   a storage processing unit configured to store data related to a transaction based on product registration in a registration apparatus in a storage unit of the registration apparatus or an electronic device different from the registration apparatus, and
   a determination unit configured to determine a checkout apparatus as an output destination for outputting the data related to the transaction according to a movement of a user of the registration apparatus based on sensing data,
   wherein, in a case where the checkout apparatus as the output destination is determined by the determination unit, the storage processing unit is configured to store information indicating the checkout apparatus as the output destination in the storage unit.
(2) The data processing system according to (1), further including a communication processing unit configured to output the data related to the transaction from the electronic device to the checkout apparatus as the output destination based on an inquiry from the checkout apparatus as the output destination to the electronic device.
(3) The data processing system according to (1) or (2), wherein the communication processing unit is configured to acquire an inquiry to the electronic device from each of a plurality of checkout apparatuses, and output the data related to the transaction from the electronic device to the checkout apparatus as the output destination based on the inquiry from the checkout apparatus as the output destination out of the plurality of checkout apparatuses to the electronic device.
(4) The data processing system according to any one of (1) to (3), wherein the communication processing unit is configured to output the data related to the transaction from the electronic device to the checkout apparatus as the output destination based on the inquiry from the checkout apparatus as the output destination to the electronic device after the information indicating the checkout apparatus as the output destination is stored in the storage unit by the storage processing unit.
(5) The data processing system according to any one of (1) to (4), wherein, in a case where an instruction regarding termination of the product registration for the transaction is input in the registration apparatus, the storage processing unit is configured to store the data related to the transaction in the storage unit, and
   wherein the determination unit is configured to determine the checkout apparatus as the output destination according to a movement of the user after the instruction is input in the registration apparatus.

### (Other embodiments)

In the above-described embodiment, an example has been described in which the determination unit 404 determines the checkout apparatus 3 as the output destination for outputting the checkout data according to the movement of the store clerk based on the image capturing data, but the present invention is not limited thereto. A determination unit 404 may determine a checkout apparatus 3 as an output destination for outputting checkout data according to a movement of a store clerk based on sensing data. The sensing data may include audio data acquired by a microphone 45. In this example, the movement of the store clerk may be an utterance of the store clerk. The audio data can include audio data based on the utterance of the store clerk.

In the above-described embodiment, an example in which the server 1 is realized by one electronic device has been described, but the present invention is not limited thereto. A server 1 may be realized by a system in which functions are distributed to a plurality of electronic devices.

The above-described embodiment may be applied not only to a data processing system but also to a method executed by the data processing system.

The above-described embodiment may be applied to a program capable of causing a computer to execute processing of each unit included in the data processing system. The above-described embodiment may be applied not only to electronic devices such as a server, a registration apparatus, a checkout apparatus, and an image capturing apparatus, but also to a method executed by each of the electronic devices. The above-described embodiment may be applied to a program capable of causing a computer to execute processing of each unit included in each of the electronic devices.

The data processing system may include one electronic device or a plurality of electronic devices. Therefore, the respective units included in the data processing system may be realized by one electronic device or may be realized by being distributed to the plurality of electronic devices.

The program may be transferred in a state of being stored in an electronic device, or may be transferred in a state of not being stored in the electronic device. In the latter case, the program may be transferred via a network or may be transferred in a state of being recorded in a recording medium. The recording medium is a non-transitory tangible medium. The recording medium is an electronic device readable medium. The recording medium may be any medium, such as a CD-ROM and a memory card, that can store a program and can cause an electronic device to read the program therefrom, and may be in any form.

In addition, although some embodiments of the present invention have been described, these embodiments have been presented as examples, and are not intended to limit the scope of the invention. These novel embodiments can be carried out in various other forms, and various omissions, substitutions, and changes can be made without departing from the gist of the invention. These embodiments and modifications thereof are included in the scope and gist of the invention, and are included in the invention described in the claims and the equivalent scope thereof.

## Claims

1. A data processing system comprising:
a storage processing unit configured to store data related to a transaction based on product registration in a registration apparatus in a storage unit of the registration apparatus or an electronic device different from the registration apparatus; and
a determination unit configured to determine a checkout apparatus as an output destination for outputting the data related to the transaction according to a movement of a user of the registration apparatus based on sensing data,
wherein, in a case where the checkout apparatus as the output destination is determined by the determination unit, the storage processing unit is configured to store information indicating the checkout apparatus as the output destination in the storage unit.

2. The data processing system according to claim 1, further comprising a communication processing unit configured to output the data related to the transaction from the electronic device to the checkout apparatus as the output destination based on an inquiry from the checkout apparatus as the output destination to the electronic device.

3. The data processing system according to claim 2, wherein the communication processing unit is configured to acquire an inquiry to the electronic device from each of a plurality of checkout apparatuses, and output the data related to the transaction from the electronic device to the checkout apparatus as the output destination based on the inquiry from the checkout apparatus as the output destination out of the plurality of checkout apparatuses to the electronic device.

4. The data processing system according to claim 2, wherein the communication processing unit is configured to output the data related to the transaction from the electronic device to the checkout apparatus as the output destination based on the inquiry from the checkout apparatus as the output destination to the electronic device after the information indicating the checkout apparatus as the output destination is stored in the storage unit by the storage processing unit.

5. The data processing system according to claim 1, wherein, in a case where an instruction regarding termination of the product registration for the transaction is input in the registration apparatus, the storage processing unit is configured to store the data related to the transaction in the storage unit, and
wherein the determination unit is configured to determine the checkout apparatus as the output destination according to a movement of the user after the instruction is input in the registration apparatus.
